# FASCICULE DE BREVET EUROPEEN

(11) **EP 1 308 614 B1**
(45) Date de publication et mention de la délivrance du brevet: **04.06.2008**
(21) Numéro de dépôt: 02292716.4
(22) Date de dépôt: 30.10.2002
(51) Int. Cl.: F02D 17/02, F02B 37/10

(54) **Système de motorisation pour véhicule**
Antriebseinrichtung für Kraftfahrzeuge
Drive system for motor vehicles

(30) Priorité: 31.10.2001 FR 0114158
(43) Date de publication de la demande: 07.05.2003
(73) Titulaire: Peugeot Citroen Automobiles SA, 92200 Neuilly sur Seine (FR)
(72) Inventeur: Fournier, Stéphane, 75015 Paris (FR); Le Lievre, Armel, 78360 Montesson (FR); Basso, Vincent, 91640 Briis sous Forges Chantecoq (FR)
(74) Mandataire: Habasque, Etienne J. Jean-François

(56) Documents cités:
- WO-A-00/65210
- GB-A- 2 121 474
- US-A- 3 963 379
- US-A- 4 548 039
- US-A- 5 230 609
- SCHECHTER MICHAEL M: "New Cycles for Automobile Engines" SAE TECHNICAL PAPERS 1999-01-0623, 1 - 4 mars 1999, XP001089612 Int. Congress & Exposition, Detroit, Michigan, Session: Advanced Powerplant Concepts

## Description

La présente invention concerne un système de motorisation pour véhicule automobile.

Plus particulièrement, l'invention se rapporte à un système de motorisation qui comporte un moteur à combustion interne muni de moyens d'admission de gaz en entrée et de moyens d'échappement de gaz en sortie et des moyens de stockage de gaz sous pression associés à des moyens de commande de leur charge/décharge adaptés pour mettre en oeuvre une phase de charge de ceux-ci, pendant laquelle l'alimentation en carburant d'au moins certains cylindres du moteur est coupée pour faire fonctionner le ou chaque cylindre dont l'alimentation est coupée, en compresseur, et une phase de décharge de ceux-ci, au cours de laquelle le gaz est utilisé pour améliorer les performances du moteur.

De tels systèmes sont déjà décrits par exemple dans les documents US-A-3 963 379 et WO 00/65210 A.

On trouvera un autre exemple d'un tel système de motorisation dans le document SAE TECHNICAL PAPER SERIES, 1999-01-0623, intitulé « New Cycles for Automobile Engines » de Michael M. SCHECHTER, International Congress and Exposition, Detroit, Michigan, March 1-4, 1999.

L'idée générale à la base du développement de tels systèmes, consiste à récupérer de l'énergie lors de certaines phases de fonctionnement du moteur, sous la forme de gaz comprimé dans les moyens d'accumulation et de réutiliser cette énergie dans d'autres phases de fonctionnement de celui-ci.

En particulier, de l'énergie peut être récupérée en phase de décélération et de freinage du véhicule.

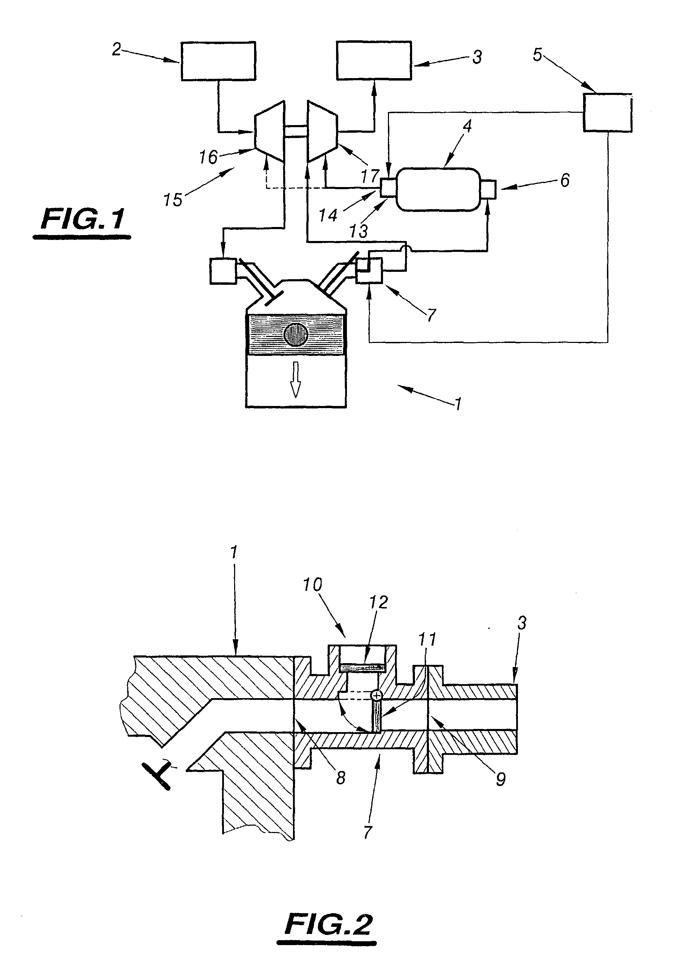

Sur la figure 2 du document de Michael M. SCHECHTER mentionné précédemment, on a représenté un exemple de réalisation d'un tel système.

Celui-ci comporte alors des moyens d'accumulation de gaz sous pression, se présentant sous la forme d'un réservoir de gaz, associés à des moyens de commande de leur charge/décharge, se présentant sous la forme d'une soupape prévue dans la culasse du moteur, au niveau d'un cylindre correspondant de celui-ci, cette soupape étant commandée pour mettre en oeuvre une phase de charge de ces moyens d'accumulation et une phase de décharge de ceux-ci à partir du et dans le cylindre.

On conçoit cependant qu'une telle structure présente un certain nombre d'inconvénients, car la soupape correspondante nécessite une modification très importante de la culasse du moteur et des moyens de commande relativement complexes.

Le but de l'invention est donc de résoudre ces problèmes.

A cet effet, l'invention a pour objet un système de motorisation pour véhicule automobile, du type comportant un moteur à combustion interne muni de moyens d'admission de gaz en entrée et de moyens d'échappement de gaz en sortie, et des moyens d'accumulation de gaz sous pression associés à des moyens de commande de leur charge/décharge adaptés pour mettre en oeuvre une phase de charge de ceux-ci, pendant laquelle l'alimentation en carburant d'au moins certains cylindres du moteur est coupée pour faire fonctionner le ou chaque cylindre dont l'alimentation est coupée, en compresseur, et une phase de décharge de ceux-ci, au cours de laquelle le gaz est utilisé pour améliorer les performances du moteur, caractérisé en ce que les moyens d'accumulation de gaz sous pression comportent une sortie de gaz raccordée à travers des moyens formant vanne pilotable par les moyens de commande, à un turbocompresseur associé au moteur, pour injecter du gaz dans celui-ci.

Selon d'autres caractéristiques :
- les moyens d'accumulation de gaz sous pression comportent une entrée de gaz raccordée aux moyens d'échappement du moteur thermique ;
- les moyens d'échappement comprennent en sortie du moteur, des moyens formant vanne pilotable à deux voies, dont l'une est raccordée au reste de ces moyens d'échappement et dont l'autre est raccordée à l'entrée des moyens d'accumulation et en ce que les moyens de commande sont adaptés, lors de la phase de charge des moyens d'accumulation, pour commander les moyens formant vanne afin de raccorder la sortie du moteur à ces moyens d'accumulation ;
- un clapet d'anti-retour est interposé entre les moyens formant vanne et l'entrée des moyens d'accumulation ;
- les moyens formant clapet d'anti-retour sont intégrés dans les moyens formant vanne pilotable au niveau de sa sortie raccordée aux moyens d'accumulation.

L'invention sera mieux comprise à la lecture de la description qui va suivre, donnée uniquement à titre d'exemple et faite en se référant aux dessins annexés, sur lesquels :
- la Fig.1 représente un schéma synoptique illustrant la structure générale d'une forme de réalisation d'un système de motorisation selon l'invention ; et
- la Fig.2 représente une vue en coupe schématique de moyens formant vanne pilotable à deux sorties, entrant dans la constitution d'un tel système.

On a en effet représenté sur la figure 1, un système de motorisation pour véhicule automobile, du type comportant un moteur à combustion interne qui est désigné par la référence générale 1 sur cette figure et qui est par exemple schématisé par un cylindre de celui-ci.

Ce moteur est muni de moyens d'admission de gaz en entrée, qui sont désignés par la référence générale 2 et de moyens d'échappement de gaz en sortie, désignés par la référence générale 3.

De plus, il est prévu des moyens d'accumulation de gaz sous pression qui se présentent par exemple sous la forme d'un réservoir, désignés par la référence générale 4 et associés à des moyens de commande de leur charge/décharge, désignés par la référence générale 5 et comportant par exemple tout calculateur approprié, adapté pour mettre en oeuvre une phase de charge de ceux-ci et une phase de décharge de ceux-ci de façon classique.

Pendant la phase de charge des moyens d'accumulation de gaz sous pression 4, l'alimentation en carburant d'au moins certains des cylindres du moteur est coupée, pour faire fonctionner ce ou chaque cylindre dont l'alimentation est coupée, en compresseur, permettant ainsi d'assurer la charge de ces moyens d'accumulation.

Durant la phase de décharge de ces moyens d'accumulation, le gaz est utilisé pour améliorer les performances du moteur.

Comme cela est illustré sur cette figure 1, les moyens d'accumulation de gaz sous pression 4 comportent une entrée de gaz désignée par la référence générale 6 raccordée aux moyens d'échappement 3 du moteur thermique 1.

En fait, ces moyens d'échappement peuvent comporter en sortie du moteur thermique 1, des moyens formant vanne pilotable à deux sorties, désignés par la référence générale 7 sur cette figure 1, dont l'une est raccordée au reste de ces moyens d'échappement 3 et dont l'autre, est raccordée à l'entrée 6 des moyens d'accumulation 4.

Les moyens de commande 5 sont alors adaptés, lors de la phase de charge des moyens d'accumulation, pour commander les moyens formant vanne 7, afin de raccorder la sortie du moteur 1 à ces moyens d'accumulation 4.

On a représenté sur la figure 2, un exemple de réalisation de tels moyens formant vanne pilotable à deux sorties.

Comme cela est représenté, ces moyens 7 sont interposés entre la sortie d'échappement correspondante du moteur 1 et le reste des moyens d'échappement 3 de celui-ci.

Ces moyens formant vanne présentent alors une entrée désignée par la référence générale 8 raccordée à la sortie du moteur et deux sorties respectivement 9 et 10, dont l'une 9, est raccordée au reste des moyens d'échappement 3, et dont l'autre 10, est raccordée à l'entrée 6 des moyens d'accumulation 4.

Un obturateur déplaçable désigné par la référence générale 11, est alors prévu dans ces moyens formant vanne, pour diriger les gaz en sortie du moteur, soit vers le reste des moyens d'échappement 3, soit vers l'entrée des moyens d'accumulation 4.

La position de cet obturateur est pilotée de façon classique par les moyens de commande 5.

Un clapet d'anti-retour est interposé entre les moyens formant vanne et l'entrée des moyens d'accumulation.

Ce clapet est désigné par la référence générale 12 sur cette figure 2 et est de préférence intégré dans ces moyens formant vanne pilotable au niveau de la sortie 10 raccordée aux moyens d'accumulation.

Comme cela est représenté sur la figure 1, le moteur est associé à un turbocompresseur désigné par la référence générale 15 et comportant une portion de compresseur 16 et une portion de turbine 17.

De façon classique, la portion de compresseur 16 est associée aux moyens d'admission des gaz 2 dans le moteur, tandis que la portion de turbine 17 est associée aux moyens d'échappement 3 de celui-ci.

Les moyens 7 formant vanne pilotable à deux sorties comportent alors une sortie associée à cette portion de turbine 17 du turbocompresseur 15 et une autre sortie raccordée à l'entrée des moyens d'accumulation de gaz sous pression 4.

La sortie des moyens d'accumulation 4, désignée par la référence générale 13, est raccordée à travers des moyens formant vanne pilotable 14 au turbocompresseur 15 associé à ce moteur.

Ainsi les moyens d'accumulation peuvent être raccordés à la portion de turbine et/ou à la portion de compresseur de ce turbocompresseur, comme cela est illustré en trait plein et en pointillés respectivement sur cette figure 1.

Ceci permet d'injecter du gaz sous pression sur cette ou ces portions du turbocompresseur lorsqu'on le souhaite.

L'utilisation du gaz sous pression injecté dans le turbocompresseur, permet d'en améliorer les performances et par conséquent, celles du moteur. On peut ainsi réduire voire éliminer le temps de réaction d'un turbocompresseur en raison de la montée en régime relativement lente de la turbine de celui-ci, sous l'action des gaz d'échappement seuls.

Il va de soi bien entendu que d'autres modes de réalisation encore peuvent être envisagés.

## Revendications

1. Système de motorisation pour véhicule automobile, du type comportant un moteur à combustion interne (1) muni de moyens d'admission de gaz (2) en entrée et de moyens d'échappement de gaz (3) en sortie, et des moyens d'accumulation de gaz sous pression (4) associés à des moyens de commande (5) de leur charge/décharge adaptés pour mettre en oeuvre une phase de charge de ceux-ci, pendant laquelle l'alimentation en carburant d'au moins certains cylindres du moteur (1) est coupée pour faire fonctionner le ou chaque cylindre dont l'alimentation est coupée, en compresseur, et une phase de décharge de ceux-ci, au cours de laquelle le gaz est utilisé pour améliorer les performances du moteur, **caractérisé en ce que** les moyens d'accumulation de gaz sous pression (4) comportent une sortie de gaz (13) raccordée à travers des moyens formant vanne (14) pilotable par les moyens de commande (5), à un turbocompresseur (15) associé au moteur (1), pour injecter du gaz dans celui-ci.

2. Système selon la revendication 1, **caractérisé en ce que** les moyens d'accumulation de gaz sous pression (4) comportent une entrée de gaz (6) raccordée aux moyens d'échappement (3) du moteur thermique (1).

3. Système selon la revendication 2, **caractérisé en ce que** les moyens d'échappement comprennent en sortie du moteur, des moyens formant vanne pilotable (7) à deux voies (9,10), dont l'une (9) est raccordée au reste de ces moyens d'échappement (3) et dont l'autre (10) est raccordée à l'entrée (6) des moyens d'accumulation (4) et **en ce que** les moyens de commande (5) sont adaptés, lors de la phase de charge des moyens d'accumulation (4), pour commander les moyens formant vanne (7) afin de raccorder la sortie du moteur (1) à ces moyens d'accumulation (4).

4. Système selon la revendication 3, **caractérisé en ce qu'**un clapet d'anti-retour (12) est interposé entre les moyens formant vanne (7) et l'entrée (6) des moyens d'accumulation (4).

5. Système selon la revendication 4, **caractérisé en ce que** les moyens formant clapet d'anti-retour (12) sont intégrés dans les moyens formant vanne pilotable (7) au niveau de sa sortie (10) raccordée aux moyens d'accumulation (4).

## Claims

1. Motorization system for a motor vehicle, of the type comprising an internal combustion engine (1) fitted with gas inlet means (2) at the inlet and gas exhaust means (3) at the outlet and pressurized gas accumulation means (4) associated with means of controlling (5) their charging/discharging adapted for bringing into operation a phase of charging the said pressurized gas accumulation means, during which the fuel supply of at least some cylinders in the engine (1) is cut off in order to cause the or each cylinder with cut-off supply to operate as a compressor, and a phase of discharging them, during which the gas is used for improving the engine performance, **characterized in that** the pressurized gas accumulation means (4) comprise a gas outlet (13) connected, via means forming a valve (14) capable of being pilot controlled by the controlling means (5), to a turbocharger (15) associated with the engine (1) in order to inject gas into the latter.

2. System according to Claim 1, **characterized in that** the pressurized gas accumulation means (4) comprise a gas inlet (6) connected to the heat engine (1) exhaust means (3).

3. System according to Claim 2, **characterized in that** the exhaust means comprise, at the engine outlet, means forming a valve (7) capable of being pilot controlled, having two ways (9 and 10), one of which (9) is connected to the rest of these exhaust means (3) and the other of which (10) is connected to the accumulation means (4) inlet (6), and **in that** the controlling means (5) are adapted to control - during the accumulation means (4) charging phase - the means forming the valve (7) in order to connect the engine (1) outlet to these accumulation means (4).

4. System according to Claim 3, **characterized in that** a non-return valve (12) is interposed between the means forming the valve (7) and the accumulation means (4) inlet (6).

5. System according to Claim 4, **characterized in that** the means forming the non-return valve (12) are integrated in the means forming the valve (7) capable of being pilot controlled at its outlet (10) connected to the accumulation means (4).

## Patentansprüche

1. Motorisierungssystem für ein Kraftfahrzeug, umfassend einen am Einlass mit Gaszufuhrmitteln (2) und am Auslass mit Gasauspuffmitteln (3) versehenen Verbrennungsmotor (1) sowie Mittel (4) zur Gasansammlung unter Druck, die Steuermitteln (5) für ihre Belastung/Entlastung zugeordnet sind, welche dazu angepasst sind, eine Belastungsphase dieser Steuermittel (5), während der die Brennstoffzufuhr zumindest bestimmter Zylinder des Motors (1) unterbrochen wird, um den oder jeden Zylinder, dessen Zufuhr unterbrochen wird, als Kompressor arbeiten zu lassen, und eine Entlastungsphase dieser Steuermittel (5), während der das Gas zur Verbesserung der Motorleistungen verwendet wird,
durchzuführen,
**dadurch gekennzeichnet,**
**dass** die Mittel (4) zur Gasansammlung unter Druck einen Gasauslass (13) aufweisen, der über Mittel (14), die ein von den Steuermitteln (5) steuerbares Ventil bilden, mit einem dem Motor (1) zugeordneten Turbokompressor (15) verbunden ist, um das Gas in den Motor (1) einzuspritzen.

2. System nach Anspruch 1,
**dadurch gekennzeichnet,**
**dass** die Mittel (4) zur Gasansammlung unter Druck einen mit den Auspuffmitteln (3) des Verbrennungsmotors (1) verbundenen Gaseinlass (6) aufweisen.

3. System nach Anspruch 2,
**dadurch gekennzeichnet,**
**dass** die Auspuffmittel am Auslass des Motors Mittel (7) umfassen, die ein steuerbares Ventil mit zwei Wegen (9, 10) bilden, von denen der eine Weg (9) mit dem Rest dieser Auspuffmittel (3) verbunden ist und von denen der andere Weg (10) mit dem Einlass (6) der Gasansammlungsmittel (4) verbunden ist, und
**dadurch**, dass die Steuermittel (5) dazu angepasst sind, um während der Belastungsphase der Ansammlungsmittel (4) die Mittel (7), die ein Ventil bilden, zu steuern, um den Auslass des Motors (1) mit diesen Ansammlungsmitteln (4) zu verbinden.

4. System nach Anspruch 3,
**dadurch gekennzeichnet,**
**dass** ein Rückschlagventil (12) zwischen die Mittel (7), die ein Ventil bilden, und den Einlass (6) der Ansammlungsmittel (4) geschaltet ist.

5. System nach Anspruch 4,
**dadurch gekennzeichnet,**
**dass** die Mittel (12), die ein Rückschlagventil bilden, in Höhe des mit den Ansammlungsmitteln (4) verbundenen Auslasses (10) in die Mittel (7), die ein steuerbares Ventil bilden, integriert sind.
